# EUROPÄISCHE PATENTSCHRIFT

(11) **EP 0 339 235 B1**
(45) Veröffentlichungstag und Bekanntmachung des Hinweises auf die Patenterteilung: **15.12.1993**
(21) Anmeldenummer: 89104572.6
(22) Anmeldetag: 15.03.1989
(51) Int. Cl.: A47B 17/02

(54) **Tisch mit höhenverstellbarer und kippbarer Tischplatte**
Table with a vertically adjustable and tiltable top
Table avec plateau basculant et réglable en hauteur

(30) Priorität: 29.04.1988 DE 8805679 U
(43) Veröffentlichungstag der Anmeldung: 02.11.1989
(73) Patentinhaber: OKA-BÜROMÖBEL OSKAR KASPER, Büromöbelfabrik, 56470 Bad Marienberg (DE)
(72) Erfinder: Piorek, Hans-Georg, D-6200 Wiesbaden (DE)
(74) Vertreter: Selting, Günther, Dipl.-Ing.

(56) Entgegenhaltungen:
- EP-A- 0 253 114
- FR-A- 1 547 581
- US-A- 2 775 497

## Beschreibung

Die Erfindung betrifft einen Tisch der im Oberbegriff des Anspruchs 1 angegebenen Art.

Tische, die in Büros als Arbeitstische oder Maschinentische benutzt werden, haben häufig eine in der Höhe und im Winkel verstellbare Tischplatte. Die Verstellung der Tischplatte ist jedoch schwierig, weil sie an beiden Enden der Tischplatte vorgenommen werden muß und hierzu Klemmvorrichtungen betätigt werden müssen, wobei die Gefahr des Verkantens besteht, wenn die Tischplatte zunächst an einem Längsrand und danach am entgegengesetzten Längsrand angehoben und am Untergestell festgeklemmt wird. Die Höhenverstellung der Tischplatte kann daher in der Regel nur in kleinen Schritten vorgenommen werden. Wenn außer der Höhenverstellung noch eine Neigungsverstellung der Tischplatte möglich sein soll, ist hierfür in der Regel ein aufwendiger Kippmechanismus erforderlich. Außerdem ermöglicht der Kippmechanismus häufig keine stabile Klemmung der Kippung, insbesondere wenn eine in der Längsmittelebene des Tisches verlaufende einzige Klemmachse vorgesehen ist.

Der Erfindung liegt die Aufgabe zugrunde, einen Tisch mit höhenverstellbarer und kippbarer Tischplatte zu schaffen, bei dem der Verstellmechanismus ein einfacheres Verstellen der Höhenlage der Tischplatte ermöglicht und trotz Kippmöglichkeit eine sichere und feste Unterstützung der Tischplatte an zwei Stellen im Abstand von der Längsmittelebene der Tischplatte erfolgt.

Die Lösung dieser Aufgabe erfolgt erfindungsgemäß mit den im kennzeichnenden Teil des Anspruchs 1 angegebenen Merkmalen.

Bei dem erfindungsgemäßen Tisch ruht die Tischplatte an jedem Ende auf zwei bogenförmigen Stäben, die in einer kreisbogenförmigen Führungsbahn des Wangenelementes ruhen, so daß sich die Gewichtsbelastung der Tischplatte über die Länge der Führungsbahn verteilt und auch Schrägkräfte aufgenommen werden können, ohne daß wesentliche Biegebeanspruchungen der Stäbe entstehen. Die beiden Stäbe können in der Führungsbahn einzeln bewegt werden. Wird nur einer der beiden Stäben verschoben, dann wird die Neigung der Tischplatte verändert. Wird dieser Stab anschließend festgeklemmt und dann der andere Stab verschoben, kann die Tischplatte wieder parallel zur ersten Stellung auf einem anderen Niveau festgeklemmt werden. Während dieser Vorgänge erfolgt keine Verkantung der Stäbe in der vertikalen Ebene des Wangenelementes. Die Höhenverstellung kann daher von einer einzigen Person durchgeführt werden, die die einzelnen Klemm- und Lösevorgänge nacheinander ausführt. Dadurch, daß der Abstand der beiden Gelenkpunkte veränderbar ist, kann sich dieser Abstand entsprechend der gewünschten Höhenlage der Tischplatte frei einstellen. Zweckmäßigerweise ist hierzu das Gelenk, mit dem der eine Stab an der Tischplatte angebracht ist, ein Festgelenk, während das andere ein Losgelenk ist, das eine horizontale Verschiebung des Gelenkpunktes in bezug auf die Tischplatte in Grenzen ermöglicht.

Der Tisch kann als Einzeltisch mit zwei Wangenelementen und einer einzigen Tischplatte benutzt werden, es ist aber auch möglich, eine Tischkombination zu bilden, bei der zwei einander benachbarte Tischplatten auf einem einzigen Wangenelement abgestützt sind. Hierzu muß das Wangenelement mindestens zwei kreisförmige Führungsbahnen nebeneinander aufweisen, damit die beiden Tischplatten unabhängig voneinander verstellt werden können.

Um die Position beider Stäbe zur Erzielung einer horizontalen Ausrichtung der Tischplatte einander besser anpassen zu können, sind vorzugsweise an jeder Führungsbahn Rastelemente vorgesehen, die mit Löchern der Stäbe zusammengreifen. Auf diese Weise erfolgt die Verstellung eines jeden Stabes in Rastschritten, wobei im Bedarfsfall auch Stellungen gewählt werden können, die zwischen zwei Rastschritten liegen.

Weitere Merkmale der Erfindung sind Gegenstand der übrigen abhängigen Ansprüche.

Im folgenden wird unter Bezugnahme auf die Zeichnungen ein Ausführungsbeispiel der Erfindung näher erläutert.

Es zeigen:
- Fig. 1: eine perspektivische Darstellung einer Tischanordnung mit mehreren unabhängig voneinander verstellbaren Tischplatten,
- Fig. 2: eine Stirnansicht eines Tisches mit schräggestellter Tischplatte,
- Fig. 3: eine Stirnansicht eines Tisches mit in der Höhe verstellter Tischplatte,
- Fig. 4: eine Explosionsdarstellung des Aufbaus eines Wangenelementes,
- Fig. 5: einen Schnitt durch das Wangenelement und die Klemmvorrichtungen entlang der Linie V-V von Fig. 4 und
- Fig. 6: eine Explosionsdarstellung der Klemmvorrichtung mit Rastelement.

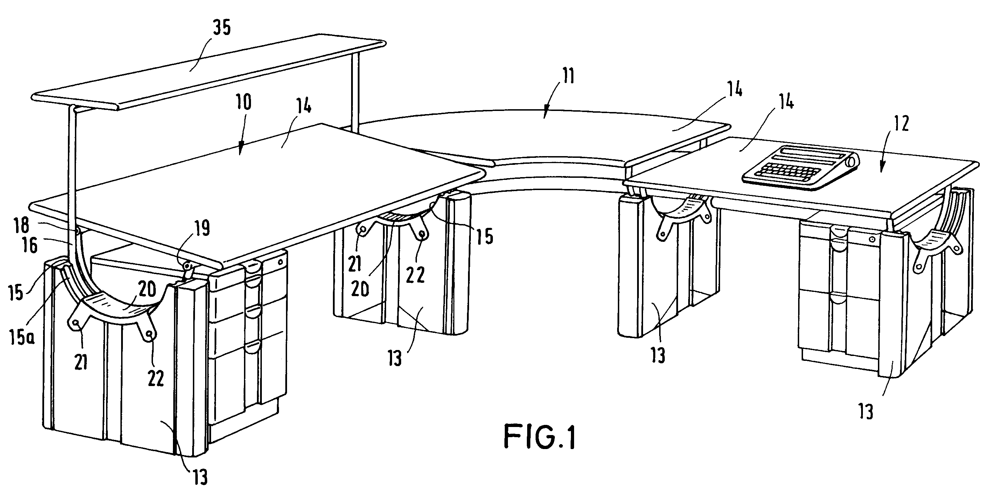

In Fig. 1 ist eine Büro-Tischkombination dargestellt, wobei ein Arbeitstisch 10, ein Ecktisch 11 und ein Maschinentisch 12 miteinander kombiniert sind. Alle drei Tische 10,11,12 haben den gleichen Grundaufbau, nämlich zwei in gegenseitigem Abstand angeordnete Wangenelemente 13, die nicht miteinander verbunden sind, und eine auf den Wangenelementen 13 abgestützte Tischplatte 14. Die Tischplatten zweier aneinandergrenzender Tische sind auf demselben Wangenelement 13 in noch zu erläuternder Weise abgestützt, so daß für die drei Tischplatten insgesamt nur vier Wangenelemente 13 erforderlich sind.

Jedes Wangenelement 13 besteht aus einem im wesentlichen rechteckigen Block, in dessen Oberseite eine halbkreisförmige Ausnehmung vorgesehen ist, in der zwei nutförmige Führungsbahnen 15,15a halbkreisförmig verlaufen. Jede der Führungsbahnen 15,15a liegt in einer vertikalen Ebene. An der Unterseite der Tischplatte 14 sind zwei kreisbogenförmig verlaufende Stäbe 16,17 gelenkig angebracht, deren Krümmungsverlauf demjenigen der halbkreisförmigen Führungsbahn 15 angepaßt ist, so daß die Führungsbahn 15 beide Stäbe 16,17, die sich zu einem Halbkreis ergänzen, aufnehmen kann. Das obere Ende des Stabes 16 ist mit einem Festgelenk 18 an der Unterseite der Tischplatte 14 angebracht, während das obere Ende des anderen Stabes 17 mit einem Losgelenk 19 an der Unterseite der Tischplatte 14 gelenkig befestigt ist. Der Ausdruck Losgelenk bedeutet, daß die Gelenkachse sich in einem horizontalen Schlitz oder Langloch bewegen kann, so daß der gegenseitige Abstand der Gelenkachsen der Gelenke 18 und 19 sich frei einstellen kann.

Die beiden Stäbe 16,17 können in der Führungsbahn 15 durch eine Klemmvorrichtung 20 festgeklemmt werden. Diese Klemmvorrichtung weist zwei Spannelemente 21,22 auf, von denen jedes in dem Bereich eines Stabes 16 bzw. 17 angeordnet ist. Anstelle der einzigen Klemmvorrichtung 20 können auch zwei getrennte Klemmvorrichtungen, für jeden Stab eine, vorgesehen sein.

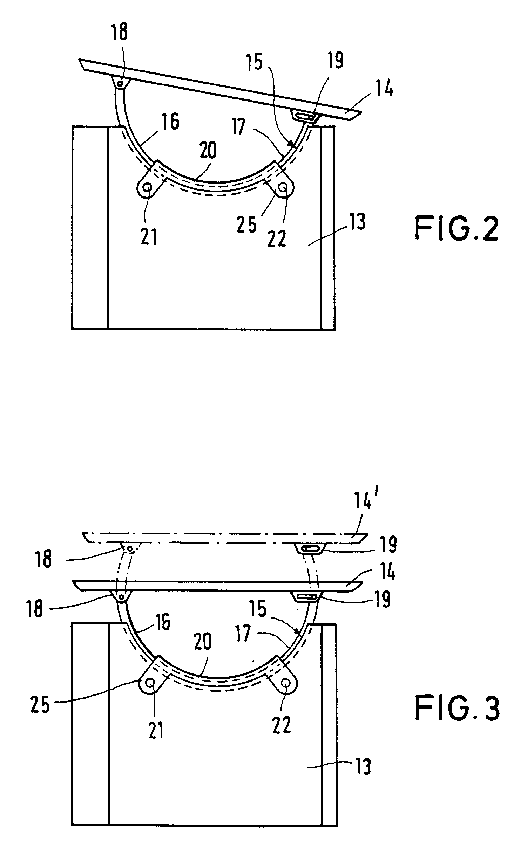

Fig. 2 zeigt den Zustand, daß der eine Stab 17 in der betreffenden Führungsbahn 15 etwa seine unterste Position einnimmt und daß das betreffende Spannelement 22 festgespannt ist und diesen Stab 17 in der Führungsbahn 15 fixiert. In diesem Zustand kann die Tischplatte 14 an ihrer entgegengesetzten Längskante angehoben werden, so daß der Stab 16 in der Führungsbahn 15 hochgleitet. Der Stab 16 kann nun durch Festspannen des Spannelements 21 in jeder beliebigen Position fixiert werden.

In Fig. 3 ist in durchgezogenen Linien die Höhe der Tischplatte 14 in ihrer untersten Position dargestellt. Soll die Tischplatte höhergestellt werden, wird zunächst die eine Längsseite hochgestellt, so wie dies in Fig. 2 dargestellt ist und anschließend, nach dem Festziehen des Spannelements 21, wird das Spannelement 22 gelöst und die andere Längsseite hochgestellt, indem der Stab 17 in der Führungsbahn 15 hochgeschoben wird. In jedem Fall liegen die Stäbe 16 und 17 vollflächig an dem betreffenden Bereich der Führungsbahn 15 an, in den sie eintauchen. Dies liegt daran, daß die Krümmung der Stangen 16 und 17 der Krümmung der kreisbogenförmigen Führungsbahn 15 angepaßt sind. In Fig. 3 ist der angehobene Zustand der Tischplatte 14 mit 14′ bezeichnet. Die Bewegungsanpassung der oberen Enden der Stangen 16,17 an die Tischplatte 14 erfolgt durch das Loslager 19.

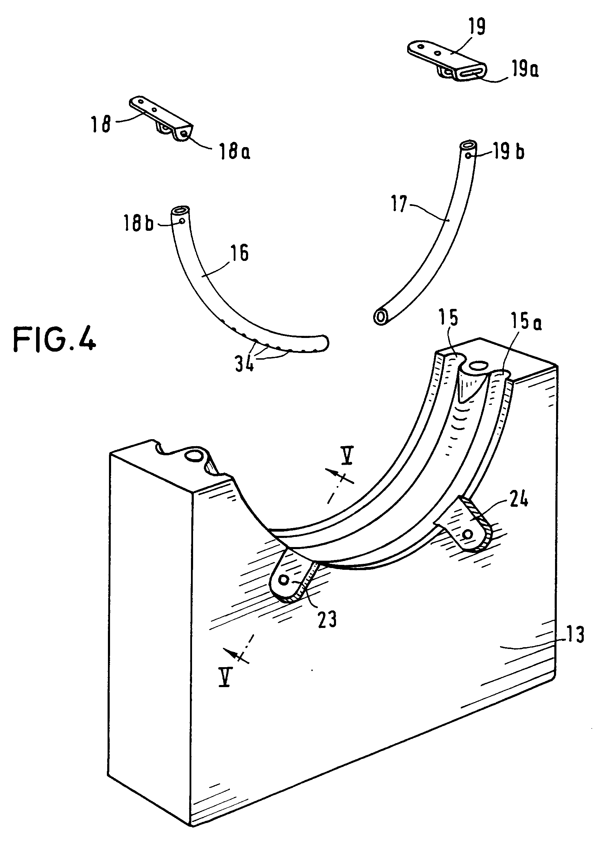

Fig. 4 zeigt insbesondere die unter der Tischplatte zu befestigenden Gelenke 18 und 19, wobei das Festgelenk 18 zwei Schenkel mit Rundlöchern 18a für den Gelenkzapfen 18b und das Losgelenk 19 zwei Schenkel mit horizontalen Langlöchern 19a für den Gelenkzapfen 19b aufweist.

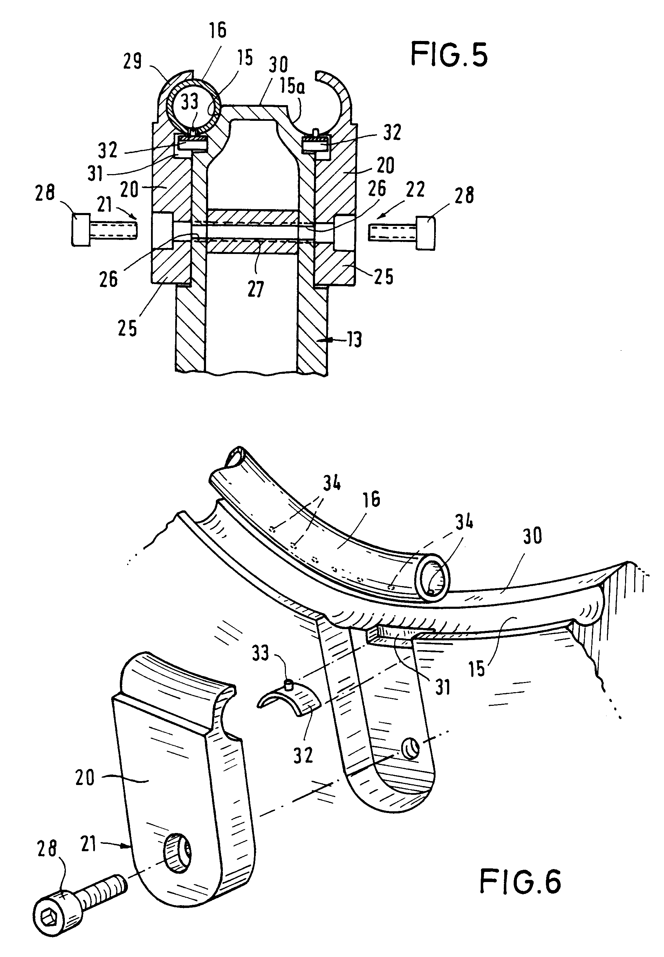

An der Außenseite des kastenförmigen Wangenelements 13 sind Aussparungen 23,24 zur Aufnahme der Laschen 25 der Klemmvorrichtung 20 vorgesehen. In den Aussparungen 23,24 befinden sich Gewindelöcher 26 eines im Inneren des Wangenelements 13 verlaufenden Metallrohrs 27. Mit Schrauben 28, die in die Schraublöcher 26 des Rohres 27 eingeschraubt werden, werden die Laschen 25 gemäß Fig. 5 an dem Wangenelement 13 festgespannt. Dabei bilden die Schrauben 28 zusammen mit den Laschen 25 die Spannelemente 21.

Wie Fig. 5 zeigt, besteht jede der Führungsbahnen 15,15a aus einer Halbnut, die den betreffenden Stab 16, im vorliegenden Fall ein Rundrohr, auf einem Viertel seines Umfangs umschließt. Von außen legt sich gegen den Stab 16 die Klemmbacke 29 der Klemmvorrichtung 20. Diese Klemmbacke 29 umschließt das Profil des Stabes 16 etwa um weitere 180°, so daß die Führungsbahn 15 und die Klemmbacke 29 den Stab auf insgesamt 270° seines Umfangs umschließen. Durch Festziehen der Spannvorrichtung 21 drückt die Klemmbacke 29 den Stab 16 fest gegen die der Klemmbacke 29 gegenüberliegende Führungsbahn 15. Die beiden Führungsbahnen 15 und 15a sind durch einen Mittelsteg 30 miteinander verbunden.

Im Bereich des Spannelements 21 sind in der Führungsbahn 15 und in der Lasche 25 sich ergänzende Aussparungen 31 vorgesehen, in denen ein elastisches Rastelement 32 in Form einer Blattfeder mit aufwärts gerichtetem Dorn 33 sitzt. Die Blattfeder ist mit beiden Enden in Schlitzen der Führungsbahn 15 eingelassen und wölbt sich in die Führungsbahn 15 hinein, so daß sie sich gegen die Unterseite des Stabes 16 wölbt. Hierbei ragt der Dorn 33 in Richtung auf eine Reihe von Löchern 34 vor, die an der unteren Seite des Stabes 16 vorgesehen sind. Wird nach dem Lösen des Spannelements 21 der Stab 16 in der Führungsbahn 15 verschoben, dann kann der Dorn 33 in jedem der Löcher 34 einrasten, so daß für das Festspannen des Stabes 16 bestimmte Rastpositionen zur Verfügung stehen, wodurch das Parallelausrichten der Tischplatte erleichtert wird.

Bei dem Ausführungsbeispiel von Fig. 1 ist der Stab 16 über das Festgelenk 18 nach oben verlängert, um eine Ablageplatte 35 zu tragen, die zusammen mit der Tischplatte in der Höhe verstellt und schräggestellt wird. Ferner können an der Klemmvorrichtung 20 oder am Wangenelement 13 noch andere Hilfseinrichtungen, wie Lampen u.dgl., befestigt werden. Schließlich eignen sich die Wangenelemente auch zur Unterbringung elektrischer Leitungen und Verbindungsdosen und zur Befestigung von Kabelkanälen.

Der erfindungsgemäße Tisch ist insbesondere als Bürotisch vorgesehen und er kann wegen seiner Höhenverstellbarkeit sowohl als Arbeitstisch als auch als Gerätetisch benutzt werden.

## Patentansprüche

1. Tisch mit höhenverstellbarer und kippbarer Tischplatte (14), mit einer Tragvorrichtung aus senkrechten Wangenelementen (13) und an der Tischplatte befestigten, in Führungsbahnen (15,15a) der Wangenelemente (13) geführten festklemmbaren Stäben (16,17),
**dadurch gekennzeichnet,**
daß die Stäbe (16,17) in der vertikalen Ebene kreisförmig gebogen sind, daß die Führungsbahnen (15) an jedem Wangenelement (13) kreisförmig verlaufen und daß zwei Stäbe (16,17) an demselben Ende der Tischplatte (14) gelenkig angreifen, wobei der Abstand der beiden Gelenke (18,19) veränderbar ist.

2. Tisch nach Anspruch 1, dadurch gekennzeichnet, daß jeweils zwei Stäbe (16,17) in derselben Führungsbahn (15) geführt sind.

3. Tisch nach Anspruch 1 oder 2, dadurch gekennzeichnet, daß jedes Wangenelement (13) mindestens zwei nebeneinander verlaufende Führungsbahnen (15,15a) für zwei angrenzende Tischplatten (14) aufweist.

4. Tisch nach einem der Ansprüche 1 bis 3, dadurch gekennzeichnet, daß die Führungsbahnen (15,15a) in den Oberseiten der Wangenelemente (13) ausgebildet sind.

5. Tisch nach einem der Ansprüche 1 bis 4, dadurch gekennzeichnet, daß die Klemmvorrichtungen (20) Spannelemente (21,22) aufweisen, die jeweils an einer vertikalen Seite des Wangenelements (13) zugänglich sind.

6. Tisch nach einem der Ansprüche 1 bis 5, dadurch gekennzeichnet, daß an jeder Führungsbahn (15,15a) ein elastisches Rastelement (32) vorgesehen ist, das mit Löchern (34) der Stäbe (16,17) zusammengreift.

7. Tisch nach einem der Ansprüche 1 bis 6, dadurch gekennzeichnet, daß jede Führungsbahn (15) sich etwa halbkreisförmig und jeder Stab (16,17) sich etwa viertelkreisförmig erstreckt.

8. Tisch nach einem der Ansprüche 1 bis 7, dadurch gekennzeichnet, daß der eine Stab (16) in einem Festgelenk (18) und der andere Stab (17) in einem Losgelenk (19) an der Tischplatte angreift.

## Claims

1. A table with a height-adjustable and tiltable table plate (14), comprising a supporting device of vertical cheek elements (13) and fixable rods (16,17) fastened to said table plate and guided in guiding paths (15, 15a) of said cheek elements (13),
characterised in that
said rods (16,17) are circularly curved in the vertical plane, that said guiding paths (15) extend circularly at each cheek element (13) and that two rods (16,17) are in pivotable engagement with the same end of said table plate (14), the distance of both hinges (18,19) being variable.

2. The table according to claim 1, characterised in that two rods (16,17) are respectively guided in the same guiding path (15).

3. The table according to claim 1 or 2, characterised in that each cheek element (13) has at least two guiding paths (15,15a) extending side by side and being related to two adjacent table plates (14).

4. The table according to one of claims 1 to 3, characterised in that said guiding paths (15,15a) are provided in the top of said cheek elements (13).

5. The table according to one of claims 1 to 4, characterised in that the clamping devices (20) are provided with tightening elements (21,22) that are accessible from a vertical side of said cheek element (13), respectively.

6. The table according to one of claims 1 to 5, characterised in that each guiding path (15, 15a) is provided with an elastic locking element (32) that engages in holes (34) in said rods (16,17).

7. The table according to one of claims 1 to 6, characterised in that each guiding path (15) extends semi-circularly and each rod (16,17) is formed as a quarter of a circle.

8. The table according to one of claims 1 to 7, characterised in that one rod (16) engages at said table plate in a fixed hinge (18) and the other rod (17) engages at said table plate in a loose hinge (19).

## Revendications

1. Table à plateau de table (14) réglable en hauteur et inclinable, avec un dispositif de support formé d'éléments de joue (13) verticaux et de barres (16, 17) immobilisables fixées au plateau de table et guidées dans des chemins de guidage (15, 15a) des éléments de joue (13), caractérisée en ce que les barres (16, 17) sont recourbées --selon une forme circulaire dans le plan vertical, que les chemins de guidage (15) s'étendent selon une forme circulaire sur chaque élément de joue (13) et que deux barres (16, 17) viennent en prise, de manière articulée, avec la même extrémité du plateau de table (14), la distance des deux articulations (18, 19) pouvant être modifiée.

2. Table selon la revendication 1, caractérisée en ce que chaque fois deux barres (16, 17) sont guidées dans le même chemin de guidage (15).

3. Table selon la revendication 1 ou 2, caractérisée en ce que chaque élément de joue (13) présente au moins deux chemins de guidage (15, 15a), s'étendant l'un à côté de l'autre, pour des plateaux de table (14) adjacents.

4. Table selon l'une des revendications 1 à 3, caractérisée en ce que les chemins de guidage (15, 15a) sont formés dans les faces supérieures des éléments de joue (13).

5. Table selon l'une des revendications 1 à 4, caractérisée en ce que les dispositifs d'immobilisation (20) présentent des éléments de serrage (21, 22) qui sont accessibles, chacun, sur une face verticale de l'élément de joue (13).

6. Table selon l'une des revendications 1 à 5, caractérisée en ce qu'à chaque chemin de guidage (15, 15a) est prévu un élément d'encliquetage (32) élastique, qui vient en prise avec des trous (34) dans les barres (16, 17).

7. Table selon l'une des revendications 1 à 6, caractérisée en ce que chaque chemin de guidage (15) s'étend selon une forme sensiblement en demi-cercle et chaque barre (16, 17) selon une forme sensiblement en quart de cercle.

8. Table selon l'une des revendications 1 à 7, caractérisée en ce que l'une des barres (16) vient en prise avec le plateau de table par une articulation fixe (18) et l'autre barre (17) par une articulation mobile (19).
